# EUROPEAN PATENT APPLICATION

(11) **EP 2 650 444 A1**
(43) Date of publication of application: **16.10.2013**
(21) Application number: 13163644.1
(22) Date of filing: 12.04.2013
(51) Int. Cl.: E02B 17/08, B66C 23/00, F16H 57/023

(54) **Maritime jack up gearboxes**

(30) Priority: 12.04.2012 GB 201206437
(71) Applicant: Agra (Precision Engineering) Co Ltd, Dundee DD1 5JT (GB)
(72) Inventor: Fyda, John, Dundee, DD1 5JT (GB)
(74) Representative: Baldwin, Mark

(57) **Abstract**

A maritime jack up gearbox (10) comprising a casing (12, 14), a plurality of gear shafts (18, 22) supported for rotation in the casing and each carrying at least one gear wheel (20, 24). The gear shafts are disposed in parallel spaced apart relation to permit meshing of the gear wheels s to define a gear train. The casing is provided with an aperture through which a first of the gear shafts is installed in and removed from the casing by translation in the axial direction of the first gear shaft. The first gear shaft carries a first said gear wheel that cannot pass through the aperture and is removably installed on the first gear shaft by translation in the axial direction of the first gear shaft. The, first gear wheel and first gear shaft are provided with mating formations that prevent relative rotation between the first gear wheel and first gear shaft.

## Description

### Field of the Invention

The invention relates to maritime jack up gearboxes.

### Background to the Invention

Maritime jack up gear boxes may be used to raise and lower the hull of jack up oil rigs. Even on a relatively small rig there may be seventy two such gearboxes. The construction of these gearboxes is safety critical as they form a part of the structure of the rig and may be subject to considerable stresses during the heavy weather conditions often encountered in operational locations.

Many jack up gear boxes are of a type manufactured by the French company CFEM and are referred to as CFEM type gear boxes. CFEM type jack up gearboxes include several gear shafts that are located out of the plane of separation of the two halves of the gearbox casing. These shafts are installed by inserting them through apertures in the casing. The larger gear wheels carried on these shafts are installed on the shafts once within the gearbox by a shrink fitting process. The shaft and shaft receiving hole in the gear wheel are manufactured to be an interference fit so to install the gear wheel the shaft is shrunk by cooling, such as with liquid nitrogen, and the gear wheel is heated. This allows the gear wheel to be slid onto the shaft and when the temperature of the two parts equalises at ambient, the gear wheel is locked onto the shaft. Stop collars used on the shaft are installed in a similar manner.

While shrink fitting in this way is a process that works, it is not an entirely reliable process with the result that the fit may not be sufficiently tight, in which case the gear wheel will rotate on the shaft under load, or the fit may be too tight promoting crack formation. Due to the safety critical nature of these gearboxes, they need to be certified for use and this requires the attendance of officials from a certifying body during post manufacture or post repair testing. This is inconvenient and increases costs and downtime.

The testing of these gearboxes involves running them under load. If one of the gear wheels is slipping under load, this will show up during these tests. However, cracking due to a tight fit will not show, particularly as it may develop over a period of use under load.

The shrink fitting of the gear wheels onto their shafts in these gearboxes presents other problems. The shrink fitting process is essentially permanent. If the gear shaft is located out of the plane of the split in the gearbox casing, the shaft and gear cannot be withdrawn from the casing via the aperture through which the shaft is installed. Accordingly, in order to remove the shaft, the gear wheel must be ground off or otherwise removed from the shaft to allow withdrawal of the shaft, which is time consuming and involves the destruction of the gear. There may also be access problems requiring the removal of other gear wheels and shafts to access the gear wheel in question. This can involve significant amounts of work and the destruction of perfectly good gears and shafts. Even where a gear shaft is located in the plane of the split in the gearbox casing and access for removing damaged gears is less problematic, there can be considerable wastage. Many of the gear shafts in such a gear box carry compound gears. Typically the smaller of the two gears is integral with the shaft while the larger gear is fitted to the shaft by shrink fitting. If the larger gear wheel on a first such gear shaft is damaged, there will typically be similar damage to the smaller gear wheel on an adjacent shaft with which it is engaged. The result is that although the larger gear wheel on the second shaft may be undamaged, it has to be scrapped because it cannot be removed from the shaft and reused.

### Summary of the Invention

The invention provides a maritime jack up gear box as specified in claim 1.

The invention also provides a method as specified in claim 8.

The invention also includes a CEFM type maritime jack up gearbox comprising;
a gear train;
a lower casing portion; and
an upper casing portion releasably securable to said lower casing portion to house said gear train, wherein said gear train comprises:
an input gear shaft carrying a gear wheel;
an output gear shaft carrying a gear wheel; and
a gear shaft assembly disposed between said input and output gear shaft for transmitting rotation therebetween, said gear shaft assembly comprising a compound gear arrangement comprising a first gear wheel removably installed on a gear shaft and a second gear wheel integral with said gear shaft, said gear shaft being installed in and removable from said lower casing portion by translation in an axial direction thereof through an aperture provided in said casing, said aperture being spaced from the respective mating surfaces of said upper and lower casing portions, said first gear wheel being incapable of passing through said aperture and comprising an axially centrally located bore provided with axially extending splines that mate with axially extending splines provided on said gear shaft to prevent relative rotation of said gear shaft and gear wheel.

### Brief Description of the Drawings

In order that the invention may be well understood, some examples thereof, which are given by way of example only, will now be described with reference to the drawings in which:
Figure 1 is a schematic plan view of a CEFM type maritime jack up gearbox with a portion of the casing removed to show a gear train housed in the casing;
Figure 2 is a schematic side elevation of the CEFM type maritime jack up gearbox;
Figure 3 is a schematic perspective view of the gear train;
Figure 4 is a schematic exploded perspective view of a gear shaft assembly of the CEFM maritime jack up gearbox;
Figure 5 is a view corresponding to Figure 4 showing a stop collar of the gear shaft assembly; and
Figure 6 is a schematic side elevation of a casing of another CEFM type maritime jack up gearbox.

### Detailed Description of the Illustrated Examples

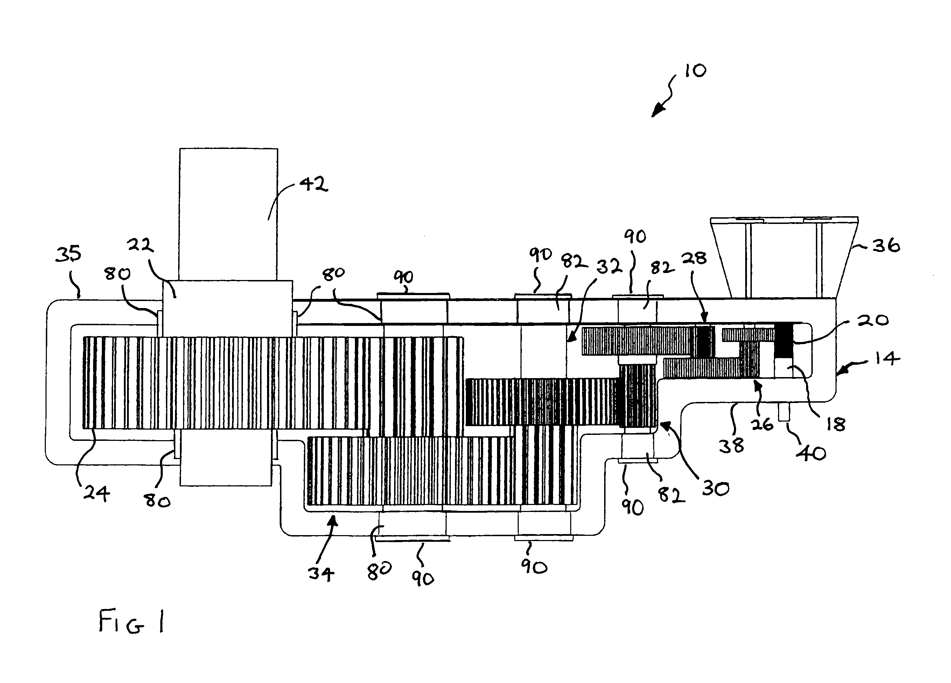

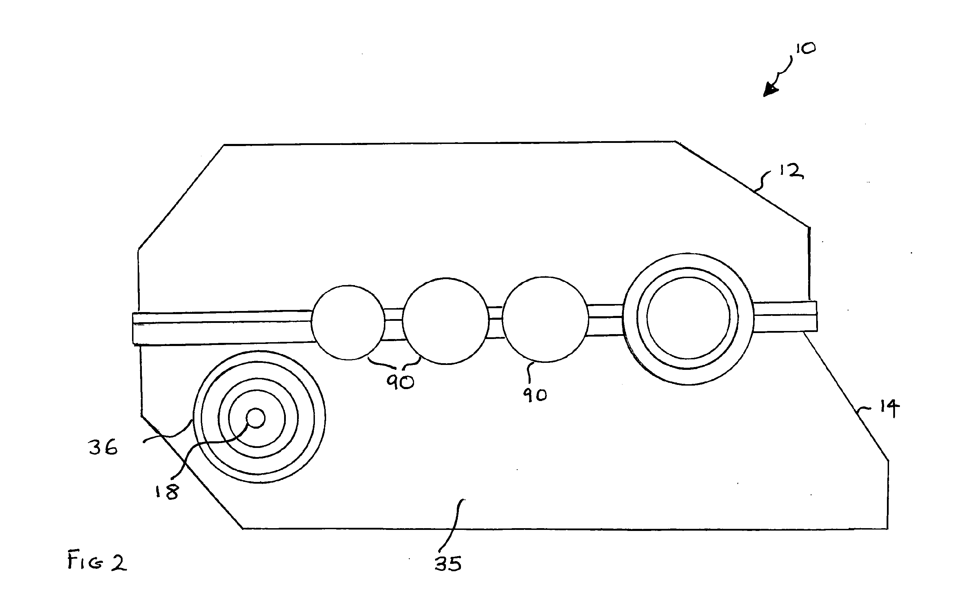

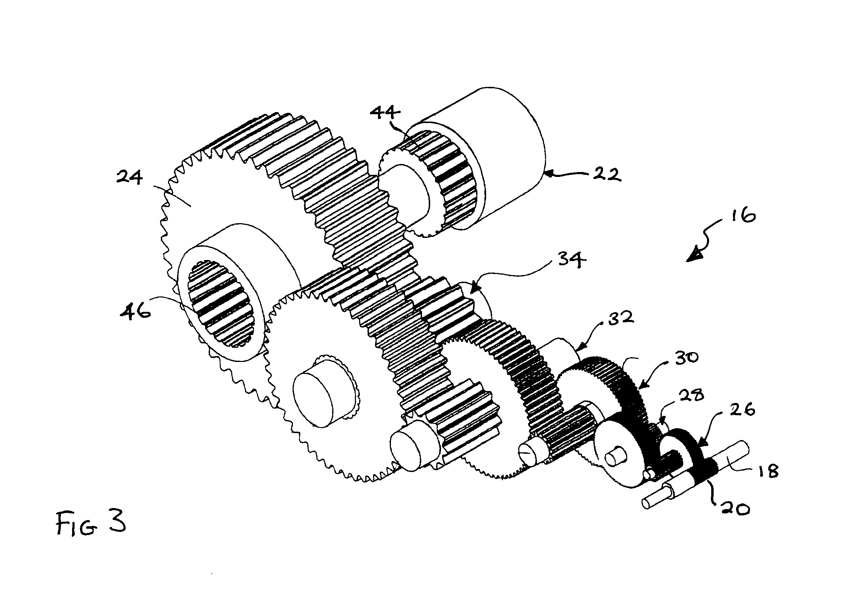

Referring to Figures 1 to 5 a CEFM type maritime jack up gearbox 10 comprises a casing that has an upper casing portion 12 and a lower casing portion 14. The casing portions can be separated to permit access to the interior of the casing and secured to one another by bolts or the like in any conventional way that will be known to those skilled in the art. The casing 12, 14 houses a gear train 16 a comprising a plurality of helical gear wheels, which is shown in Figure 3.

The casing 12, 14 may be approximately 2 metres long and 1 metre high and the gearbox may weigh approximately 3.5 tonnes.

The gear train 16 comprises an input shaft 18 carrying a gear wheel 20, an output shaft 22 carrying an output gear wheel 24 and a plurality of gear shaft assemblies 26, 28, 30, 32, 34 disposed between said gear wheels 20 and 24. The input and output shafts 18, 22 and the shafts of the gear shaft assemblies 26-34 are disposed in parallel spaced apart relation to permit meshing of gear wheels of adjacent shafts to transmit rotary motion from the input shaft to the output shaft. The gear shaft assemblies 26-34 each carry a compound gear arrangement and in each case, the smaller gear of the compound gear arrangement engages a larger gear of an adjacent shaft in such a way that the gearbox functions as a speed reducer or torque multiplier. The reduction ratio of the gear box may be between 3000:1 and 5000:1.

A sidewall 35 of the lower casing portion 14 is provided with a mounting 36 for a motor (not shown) that in use will be coupled to the input shaft 18 to drive the output shaft 22. A sidewall 38 of the lower casing portion 14 is provided with an aperture (not shown) opposite the mounting 36 through which an end 40 of the input shaft 18 protrudes. This is to allow the input shaft 18 to be turned manually to take up any slack prior to operation of the motor. In Figure 1, an output shaft extension 42 is shown fitted into the output shaft 22. The output shaft extension may be splined to engage splines provided in an axially extending bore provided in the output shaft extension.

Referring to Figure 3, the output shaft 22 includes a splined portion 44. The output gear wheel 24 has an axially disposed through-bore into which the output shaft can be inserted. The through-bore is provided with splines 46 configured to mate with the splined portion 44. The output shaft 22 can be assembled with the output gear wheel 24 by translation in the axial direction of the shaft to bring the splines of the splined portion 44 into engagement with the splines 46. Once assembled in this way, the positive engagement provided between the output gear wheel 24 and output shaft 22 is such that the two parts can be turned with no relative rotation between them so as to be able to transmit a torque.

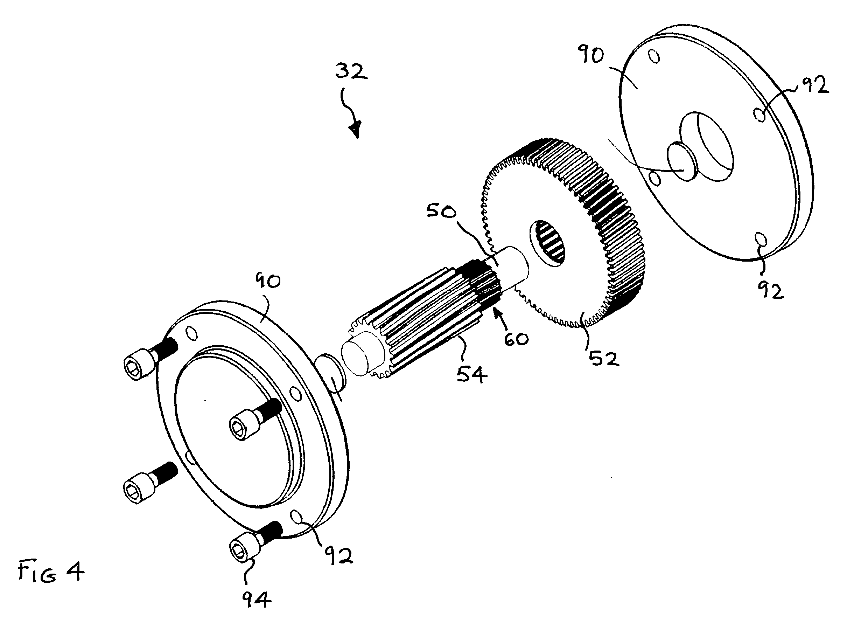

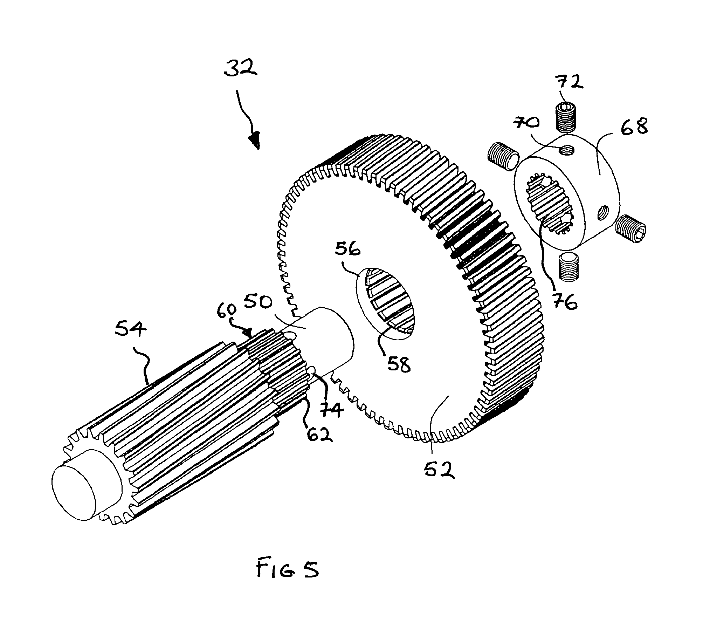

Referring to Figures 4 and 5, the gear shaft assembly is illustrated as an example of the structure that may be embodied in each of the gear shaft assemblies 26,-34. The gear shaft assembly 32 comprises a gear shaft 50 that carries a compound gear arrangement comprising a first gear wheel 52 and a second gear wheel 54. The first gear wheel 52 is removably installed on the gear shaft 50. The second gear wheel 54 is machined into the bar stock from which the gear shaft 50 is manufactured so as to be integral with the gear shaft. The first gear wheel has an axially extending through-hole 56, which is provided with axially extending splines 58. The gear shaft 50 is provided with a splined portion 60 that has splines 62 configured to mate with the splines 58 in the through-hole 56 to lock the two parts against relative rotation.

As shown in Figure 5, a locking collar 68 may be provided to lock the first gear wheel 52 on the gear shaft 50 so that the first gear wheel is locked between the second gear wheel 54 and the collar to prevent relative sliding movement of the first gear wheel in the axial direction of the gear shaft. The collar 66 may have a plurality of radially extending apertures 70 that are threaded to permit the collar to be secured on the gear shaft 50 by screwing the ends of respective grub screws 72 into apertures 74 provided in the gear shaft. The through-bore of the collar may be provided with splines 76 to engage suitably configured splines (not shown) on the gear shaft 50.

The input and output gear shafts 18, 22 and the gear shafts 50 of the gear shaft assemblies 26-34 are supported in bearings mounted in suitable housings defined in the opposed sidewalls 35, 38 of the lower casing portion 14. The output shaft 22 and the gear shaft 50 of the adjacent gear shaft assembly 34 may be supported in aluminium bronze journal bearings 80 while the other gear shafts 50 and the input gear shaft 18 may be supported by suitable rolling element bearings.

The gear shaft assemblies 26-34 may be held against axial movement in the lower casing portion 14 by end caps 90 fitted to the sidewalls 35 38. Referring to Figure 4, the end caps 90 are provided with a plurality of through-holes 92 to allow them to be secured to the sidewalls 35, 38 of the casing 12, 14 by means of bolts 94 or nuts screwing onto threaded studs fixed in and protruding from the sidewalls. Packing pieces, or shims, 96 may be positioned between the respective ends of the gear shafts 50 and the end caps 90 to adjust the end float of the shafts. The packing pieces may include low friction discs to bear against the ends of the shafts. Alternatively, or in addition, the end caps 90 may be provided axially centrally located spigots that can be ground to size to set the desired end float.

Referring to Figure 1, the axes of the output gear shaft 22 and the gear shafts 50 of the gear shaft assemblies 30-34 are located in the plane of separation of the upper and lower casing portions 12, 14. The axes of the input gear shaft 18 and the gear shafts 50 of the gear shaft assemblies 26, 28 are located below the plane of separation. Thus, the input gear shaft 18 and the gear shafts 50 of the gear shaft assemblies 26, 28 have to be installed by axial translation of the shafts through respective apertures provided in the sidewall of the lower casing portion 14.

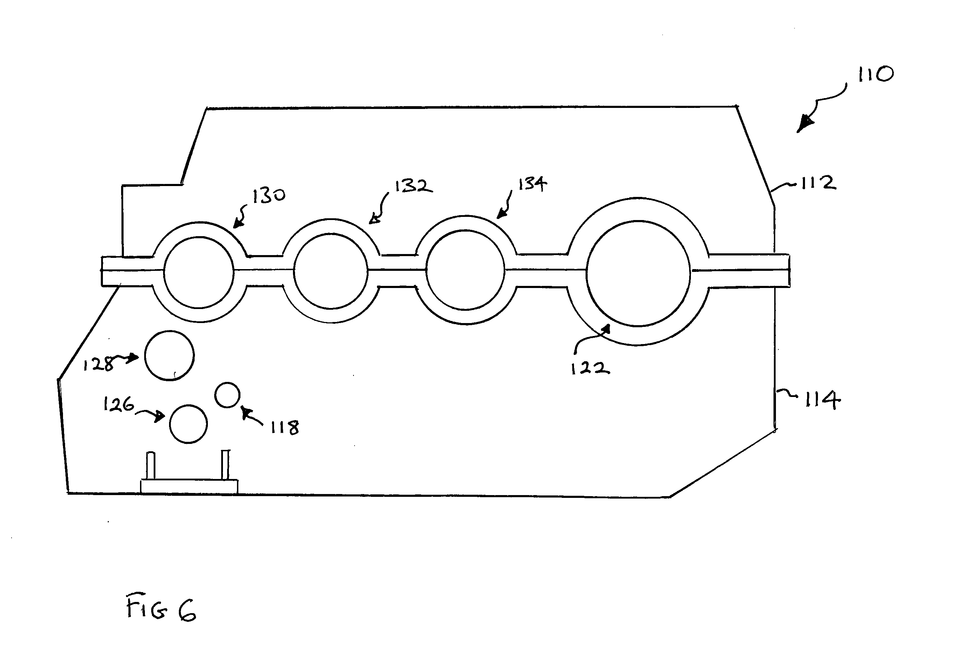

Figure 6 shows a casing for another CEFM type maritime jack up gearbox 110 with the shafts, end caps and motor mounting omitted to illustrate the layout of the apertures defined by the casing that receive the shafts of the gear train. Reference numbers corresponding to reference numerals applied to the input gear shaft, output gear shaft and gear shaft assemblies of Figure 3 incremented by 100 have been used to illustrate the layout of shafts of the gear train, which differs from the layout of the gear train 16 of the CEFM type maritime jack up gearbox 10. As shown in Figure 6, the axes of the output gear shaft 122 and the gear shafts of the gear shaft assemblies 130-134 lie in the plane of separation of the upper and lower casing portions 112, 114, whereas the input gear shaft 118 and the gear shafts of the gear shaft assemblies have their axes of rotation disposed below the plane of separation. In this example, instead of having the these shafts disposed to one side of the gear shaft assembly 130 in a manner corresponding to the arrangement shown in Figures 1 and 3, the shafts are disposed substantially directly below the gear shaft assembly 130. A further difference is that in the gear box the gear shafts of the gear shaft assemblies 126, 128 do not extend between the opposed sidewalls of the lower casing portion 114. Instead, the lower casing portion 114 has an internally disposed rib (not shown) located intermediate the opposed sidewalls of the lower casing portion 114 and one end of the respective gear shafts of the gear shaft assemblies 126, 128 is supported by a respective rolling element bearing located in the internal rib.

In assembling the CEFM type maritime jack up gearboxes 10, 110, the input gear shafts and the gear shafts of the gear shaft assemblies that do not lie in the plane of separation of the upper and lower casing portions are installed in the lower casing portion by axial translation of the shafts through respective apertures provided in a sidewall of the lower casing portion. For the gear shaft assemblies, the larger gear wheel is mated with the gear shaft by relative movement of the gear shaft through the axially centrally disposed through-bore of the gear wheel to mate the splines in the through-bore with the splines of the splined portion provided on the gear shaft. The respective collars are then fitted on the shaft and secured in place using the grub screws. The grub screws may be secured in the threaded apertures in the collars by means of a locking medium such as an anaerobic locking fluid. The gear shafts of the gear shaft assemblies can then be enclosed by the respective end caps and the end float of the shafts set by using packing pieces or suitable grinding of spigots provided on the end caps that are configured to bear against the ends of the shafts or interposed low friction discs.

Since the non-integral gear wheels provided on the gear shafts in the illustrated gearboxes are positively locked against relative rotation by engagement of mating formations provided on the gear shaft and in an axially extending through-bore of the gear wheel, they can be made removable and shrink fitting so that shrink fitting is not required. Accordingly, the time consuming certification tests required for gearboxes comprising shrink fit gear shaft assemblies is avoided.

The removable fit of the non-integral gear wheels on the gear shafts of the illustrated gearboxes makes it possible to disassemble individual gears and gear shafts without the need to destroy components. Furthermore, where there is a gear wheel on a gear shaft that is damaged and integral with the shaft, the removable gear wheel can be readily removed from the gear shaft and reused on another gear shaft.

In order to overhaul and repair conventional maritime jack up gearboxes that have shrink fit gear assemblies, it is necessary to remove the gearbox from the oil rig to carry out the necessary repairs. The illustrated maritime jack up gearbox examples may be overhauled or repaired *in situ* thereby reducing downtime and transport costs.

## Claims

1. A maritime jack up gearbox comprising a casing and a plurality of gear shafts supported for rotation in said casing and each carrying at least one gear wheel, wherein said gear shafts are disposed in parallel spaced apart relation to permit meshing of said gear wheels to define a gear train, said casing is provided with an aperture through which a first said gear shaft is installed in and removed from said casing by translation in the axial direction of the first gear shaft, said first gear shaft carries a first said gear wheel that cannot pass through said aperture and is removably installed on said first gear shaft by translation in said axial direction of the first gaerr shaft, said first gear wheel and first gear shaft being provided with mating formations that mate to prevent relative rotation between said first gear wheel and first gear shaft.

2. A maritime jack up gearbox as claimed in claim 1, wherein said formations comprise splines.

3. A maritime jack up gearbox as claimed in claim 1 or 2, wherein said first shaft carries a second gear wheel that is able to pass through said aperture.

4. A maritime jack up gearbox as claimed in claim 3, wherein said second gear wheel is integral with said first gear shaft.

5. A maritime jack up gearbox as claimed in any one of the preceding claims, further comprising oppositely disposed end caps secured to said casing and wherein a range of movement of said first gear shaft in an axial direction thereof is set by:
i) packing disposed between respective ends of said first gear shaft; or
ii) the configuration of respective spigots provided on said end caps.

6. A maritime jack up gearbox as claimed in claim 5, wherein said packing comprises respective low friction members arranged to bear against the ends of said first gear shaft.

7. An oil rig fitted with at least one maritime jack up gearbox as claimed in any one of the preceding claims.

8. A method of installing a gear shaft assembly in a maritime jack up gearbox, said method comprising installing a gear shaft in a casing of said gearbox by translation in an axial direction of the gear shaft through an aperture in a sidewall of said casing of said gear box, installing a gear wheel on said gear shaft within said casing by causing relative axial translation between said gear shaft and an axially extending through-bore to bring locking formation disposed in said through-bore of said gear wheel into mating engagement with locking formations disposed on said gear shaft so as to fix said gear shaft and gear wheel against relative rotation, wherein said gear wheel is configured such that it cannot pass through said aperture.

9. A method as claimed in claim 8, further comprising fitting a locking collar onto said shaft and securing said locking collar to said shaft so as to lock said gear wheel between said locking collar and a shoulder defined by said gear shaft to prevent movement of said gear wheel in said axial direction of the gear shaft.

10. A method as claimed in claim 9, comprising securing respective end caps to said casing opposite the respective ends of said gear shaft and:
i) providing packing between said ends and said end caps; or
ii) sizing respective spigots provided on said end caps,
to set a required range of movement of said gear shaft in said axial direction.

11. A method as claimed in claim 10, wherein said packing comprises a low friction member disposed in engagement with the respective said end.

12. A method as claimed in any one of claims 8 to 11 performed in situ on an oil rig.
